**Europäisches Patentamt**

(19) **European Patent Office**

**Office européen des brevets**

(11) Publication number: **0 261 984**
**A2**

# (12) EUROPEAN PATENT APPLICATION

(21) Application number: **87308517.9**

(22) Date of filing: **25.09.87**

(51) Int. Cl.⁴: **G 01 N 23/04**

(30) Priority: **26.09.86 GB 8623196**

(43) Date of publication of application:
**30.03.88 Bulletin 88/13**

(84) Designated Contracting States:
**BE CH DE ES FR GB IT LI NL SE**

(71) Applicant: **Robinson, Max**
**201 Derby Road**
**Nottingham NG7 1QJ (GB)**

(72) Inventor: **Robinson, Max**
**201 Derby Road**
**Nottingham NG7 1QJ (GB)**

(74) Representative: **Hayward, Denis Edward Peter et al**
**Lloyd Wise, Tregear & Co. Norman House 105-109 Strand**
**London WC2R 0AE (GB)**

(54) **Three-dimensional visual screening system.**

(57) A binocular stereoscopic x-ray inspection system is provided in which the objects to be inspected pass successively under two x-ray beams, and over two respective line-array detectors upon which the beams fall, the two beams being set at an angle to one another in the plane parallel to the path of movement so as to capture left and right perspective views of each object on the line-scan principle. Those views are stored in respective frame stores, the video information from which is employed to create a composite image on a monitor that can be viewed as an apparently three-dimensional image. The technique is not limited to x-rays, nor to objects that travel nor to rectilinear movement but instead the relative movement could be achieved, for instance, by mounting two line sensor cameras on a rotating head.

EP 0 261 984 A2

**Description**

THREE-DIMENSIONAL VISUAL SCREENING SYSTEM

This invention relates to visual screening and inspection systems, such as are used for the X-ray security screening of baggage at airports and the like. Currently available x-ray screening equipment based on the linescan principle provides high quality video images on standard CCTV monitors. This technique has been shown to be superior to previous methods used for security screening applications. The images are, however, inevitably only two-dimensional and in certain instances their interpretation, even by an experienced observer, can be difficult. An attempt to overcome this by using a folded linescan array to provide a kind of linear perspective view has already been implemented. Whilst this method can provide an alternative type of two-dimensional view it is still unable to give an observer any real kind of spatial information.

According to the present invention, there is provided a visual screening system in which relative movement takes place between the object to be inspected and the inspection means, the inspection means obtains left and right perspective views of the object under inspection by performing two separate line-scan operations with the line direction transverse to the direction of relative movement, two video frame stores are provided for storing, respectively, the left and right view information, and display control means are arranged to extract the left and right video image information from the frame stores and input that information to a display monitor to construct a composite image that can be viewed as an apparently three-dimensional image.

In one configuration, two x-ray sources and two linescan detectors may be used. A more elegant technique is to use only one x-ray source and to derive two collimated beams from it. Two linescan detector arrays are again required. The amount of depth in the stereoscopic image perceived by an observer will be determined to some extent, but not entirely, by this x-ray source/linescan detector array geometry.

The object under inspection passes through the screening unit as before, but now it encounters two x-ray beams. Since the angle between these two beams has been carefully calculated, effective left and right perspective views of the object will be built up as it passes the two linescan ·detectors. The information from each detector is then stored in a separate video frame store. The write-in and storage process is accurately timed so that the two perspective views are placed in the correct addresses relative to each other in the video memories.

It is important to note that the object may well be passing through both x-ray beams simultaneously during most of the inspection time. The relationship between the timings of the storage of information obtained from each beam will be such as to enable a three-dimensional image to be subsequently constructed. The relative timing can advantageously be varied in order to modify the extent of the stereoscopic region that may eventually be observed.

Arrangements according to the invention will now be described by way of example and with reference to the accompanying drawings, in which:-

Figure 1 is a pictorial diagram of a prior art two-dimensional-image baggage-screening system.

Figure 2 is a pictorial and block diagram of a baggage-screening system in accordance with the invention,

Figure 3a is a diagram to explain the scanning operation in the system of Figure 2,

Figure 3b is a diagram useful in understanding display of the video information gathered by the scanning operation of Figure 3a, and

Figure 4 is a diagram illustrating the preferred way of presenting the video information.

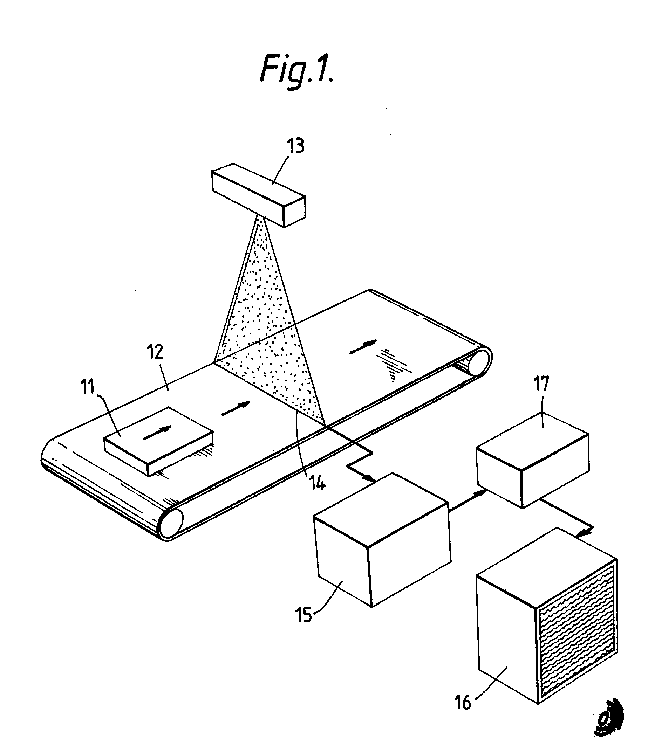

Referring firstly to Figure 1, in an existing two-dimensional linescan system, such as that marketed by Astrophysics Research Limited of Windsor, England, an object 11 moving along a conveyor 12 passes through an infra-red beam which triggers (a) an x-ray source 13 to turn on and (b) the photodiode detector array, indicated at 14, to commence scanning and storing the intensity information, line by line, in a video frame store included in control electronics 15. The picture is then displayed on a tv monitor 16 under the control of an operator's console 17.

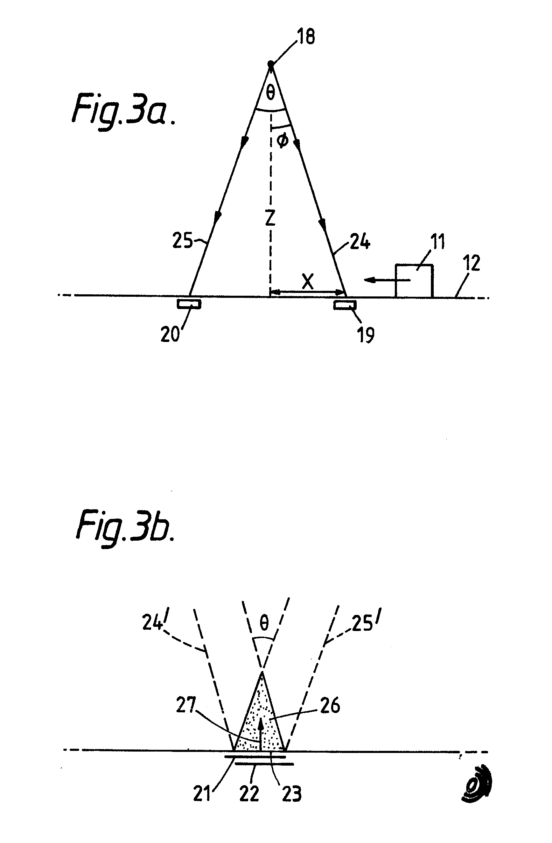

In the three-dimensional system according to the invention the operation may be as follows. Referring to Figure 3a, the object 11 under test passes into an inspection tunnel and breaks an infra-red beam. This turns an x-ray system (or systems) 18 on and also triggers a first linescan array 19 to begin scanning at time $t_0$ and storing the information it sees. After a specific short interval, determined by the speed of the conveyor belt 12 and the distance between the detector arrays, a second linescan detector array 20, displaced from the first in the direction of travel of the object 11, will also begin to scan at time $t_1$ and store the information in a separate memory. The scans of the two detector arrays 19, 20 switch off at times $t_2$ and $t_3$ respectively.

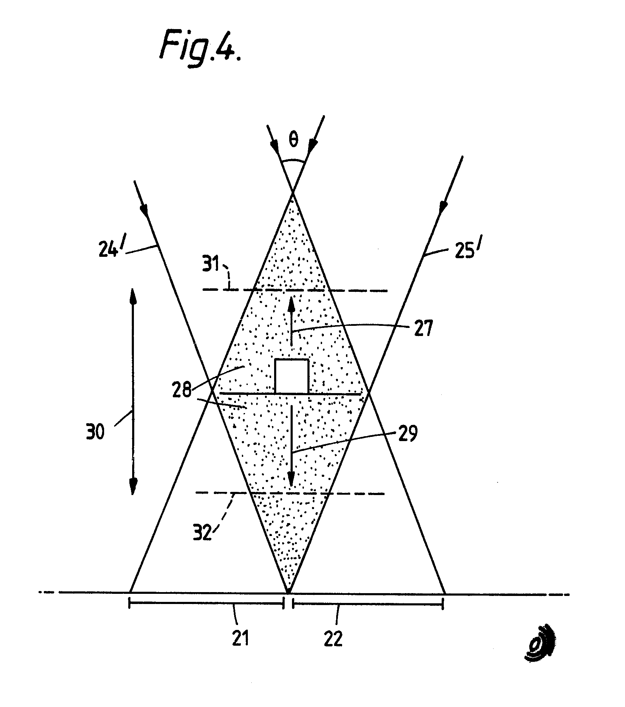

The effective stereoscopic field of view is derived as shown in Figure 4. Due to the dynamic nature of the system, if an object passes through a thin curtain of x-rays being sampled by a linescan detector a perspective view is built up, similar to that of a static object being irradiated by a parallel beam of x-rays and having the intensity information detected by a two-dimensional array. In the arrangement described, two perspective views are obtained in this way by means of the two curtain beams 24, 25 displaced angularly by the angle $\Theta$ (Figure 3a). In order to view the object stereoscopically these views must now be presented correctly on a monitor screen. If presented as in Figure 3b, with the left perspective view, represented at 21, and the right perspective view, represented at 22, merely superimposed on a monitor screen 23, the disparity information contained in the two views will always give rise to an image which appears to be inside the monitor screen. That is to say, the geometrically defined triangular stereoscopic region 26 will display only positive disparity increasing in the direction of the arrow 27.

However, by varying the relative horizontal position of the left image with respect to the right, then the object may be made to appear to be either deeper into the monitor or standing out from the face of the screen. A complete double-triangle stereoscopic field of view 28 having both positive and negative disparities, indicated respectively by the arrows 27 and 29, is as shown in Figure 4. In this Figure, and also in Figure 3b, the "right" and "left" image displaying beams 24', 25' contain the object viewing information gathered respectively by the right and left beams 24, 25 of Figure 3a.

The whole of this geometrical stereoscopic region will not normally be available for use since such large screen parallaxes will exist at its extremities that the tolerance of fusion limit for human observers will be exceeded. The extent of the "comfortable" stereo region for most human observers is indicated in Figure 4 to lie in the region indicated by the double arrow 30 between the broken liners 31, 32. As will be later discussed, the amount of depth perceived by an observer will be determined by the angle $\Theta$ between the two x-ray beams, the relative timings of $t_0$ and $t_3$ (Figure 3a), the observer viewing distance to the monitor screen and any artificial lateral shifts introduced between the left and right perspective views.

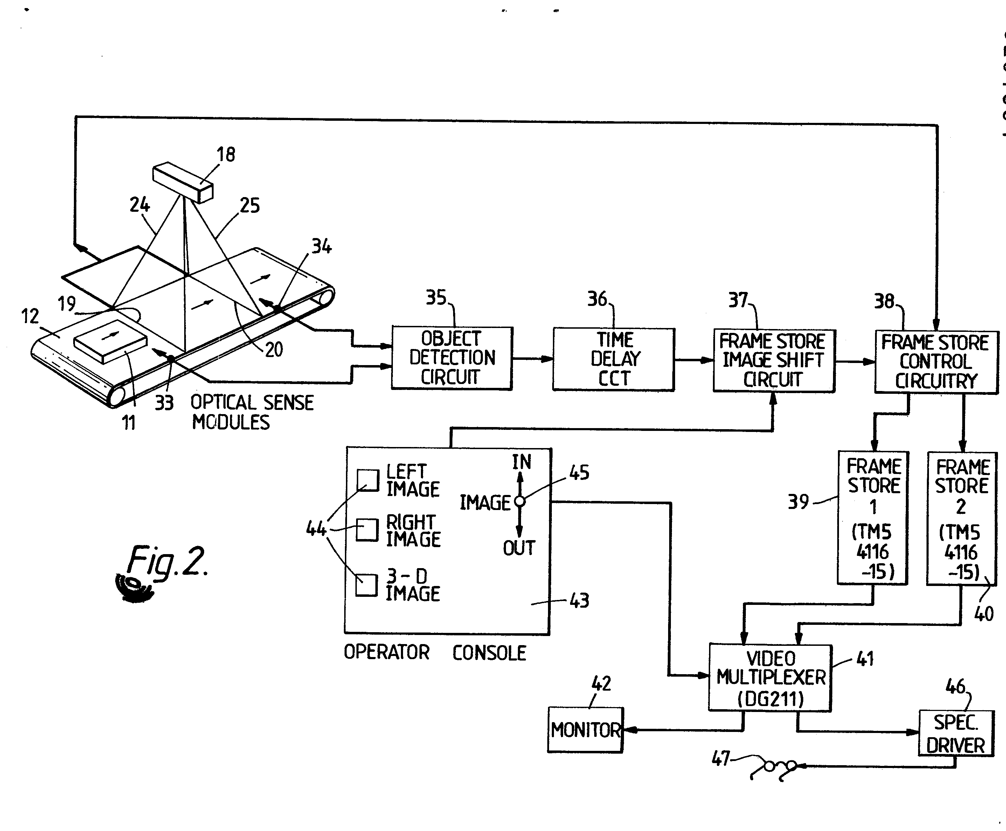

Referring now to Figure 2, this illustrates the complete system. the object 11 on the conveyor belt 12 passes successively beneath two collimated curtain beams 24, 25 from a single x-ray source 18 and over two linescan detector arrays 19, 20, respectively in the paths of the two beams 24, 25, which extend transversely of the belt and are spaced in the direction of travel. The passage of the object is sensed by successive optical sensors 33, 34 which deliver signals to an object detection circuit 35 the output of which is channelled via a time delay circuit 36 and a frame store image shift circuit 37 to frame store control circuitry 38. The linescan information from the two linescan detector arrays 19, 20 is applied under the control of the frame store control circuitry 38 to respective first and second frame stores 39, 40 and these frame stores supply the video information for the right and left perspective images to a tv monitor 42 via a video multiplexer 41 controlled by the operator's console 43, which console can also control the frame store image shift circuit 37. The console 43 has controls 44 enabling the operator to select for display either the right or the left image alone or the three-dimensional image, and a control 45 for causing the 3-D image to appear to recede deeper into the monitor or to stand out from the monitor screen by means of lateral shifts of the right and left images as already described.

The information contained in the right and left video frame stores 39, 40 can be used to construct a three-dimensional image using any of the well documented display methods, eg red-green anaglyph, split-screen, double monitor, half-silvered mirror and polaroid glasses, time-division technique etc.

The particular system preferred and illustrated in Figure 2 is time-division technique. This takes advantage of the interlace facility in the standard television format and uses electro-optic viewing spectacles 47 for the observer which are controlled from the video multiplexer 41 via a spectacle driver 46. Since the video information is stored in memories it is quite feasible to display this at twice the normal CCTV frame rate, ie. 50 frames/sec instead of 25 frames/sec. The visual information is then presented at a rate which is above the flicker threshold frequency for typical monitor screen brightness levels. This is compatible with the high definition television standards currently under development.

The image is perceived as three-dimensional since a left and a right perspective view of the object are obtained . There is a limit to the amount of parallax (ie. separation between left and right images) that can be contained in the combined image if it is to be readily viewable by a human observer (ie. human tolerance of fusion limit). For a tv monitor screen 10″ wide viewed from a distance of 500mm this limit is around 10mm.

The geometry is as follows:-

The parallax in an image obtained as in Figure 3a is given by:-

Parallax (P) = 2x = 2z tan $\varphi$

The maximum parallax ($P_m$) permissible for easy fusion by a human observer is known. If now the maximum height of an object for inspection is determined as $z_m$, then the correct beam angle can be obtained from:-

$$P_m = 2\, z_m\, \tan \phi$$

$$\text{or}$$

$$\tan \phi = \frac{P_m}{2\, z_m}$$

The angle between the two beams should be $2\varphi = \Theta$. From this the distance from the x-ray source to the detectors and the detector separation can be selected.

As the object passes through the inspection tunnel the first linescan detector begins to scan; triggered ON as the object breaks an infra-red beam in the tunnel. If the detector scans n times/sec and the speed of the object is m inches/sec then the resolution in sampling will be $\frac{m}{n}$ inches. If the second detector is d inches away from the first in the direction of travel then the second detector can start to scan $\frac{m}{d}$ secs after the first, or after $\frac{dn}{m}$ scans of the first detector.

Information from each detector is loaded into a standard video frame store, column by column in the normal manner. As already explained with reference to Figure 3b, constructing the picture merely by superimposing the images will give rise to an image which will appear to be inside the monitor screen. The part of the object resting on the conveyor will appear to be in the plane of the monitor screen. This mode of display only uses one half of the available stereoscopic field of view and, as discussed, in order to utilise the further region of stereoscopic view which appears to project out from the front of the monitor screen it is necessary to move one of the images laterally with respect to the other. This can be done either by changing the time between the loading of the first and second images or alternatively by shifting one of the images in its frame store after capture. This second method simply requires a pulse into a commercially available frame store that will cause all columns of information to move simultaneously to the left or right. The vacant columns left behind are filled with "peak white" information so as to appear as normal background.

Although the system as described is primarily for security screening applications (e.g. airport baggage), the same technique may be employed for medical screening and general industrial screening. While in the system particularly described the scanning system is static and the object to be inspected travels, the invention is also applicable to the case in which the scanning system, ie. the x-ray source and the detector assembly, travels and the object is static, the only requirement being that there should be relative movement between the two, and in medical applications it may be more convenient for the object to be inspected, ie. the patient, to remain static. The invention has particular advantages in the medical field over existing screening systems in that improved resolution can be obtained, image capture can be more rapid, the patient does not receive as large a dose of radiation and the equipment can be less expensive.

In the industrial field the invention is applicable to general industrial inspection, for example in the checking of machine parts, turbine blades, packaged foods, welded joints etc.

Another major field of application of the invention is with employment of the same technique using visible light and solid state linescan sensor cameras, which are commercially available from a number of sources, such as Pulnix America Inc of Sunnyvale, California and Basingstoke, England. Two such linescan cameras can be configured into a stereoscopic viewing system and the two 2-dimensional images (left and right perspective) stored as previously described for creation from them of a 3-dimensional composite image. Again the object to be inspected can travel while the scanning system remains static or vice versa. The relative travel between the object to be inspected and the camera assembly need not be rectilinear but can follow a curve path. This leads to the attractive possibility of the two cameras being mounted on a rotating head or platform so as to sweep round inspecting surrounding objects; particularly advantageous in the case of visual inspection from a remote location using a robot.

In my previous Patent Specification GB-2163565 there is described a technique for injecting measuring markers into the left and right perspective views in a three-dimensional viewing system. This can also be employed in the present case, either with an x-ray or a visible light system, co-ordination of the markers being used to make depth measurements in the stereoscopic display and to test the tolerance of fusion limits of individual observers.

## Claims

1. A binocular stereoscopic screening or inspection system in which relative movement takes place between the object to be inspected and the inspection means, the inspection means obtains left and right perspective views of the object under inspection by performing two separate linescan operations with the line direction transverse to the direction of relative movement, two video frame stores are provided for storing, respectively, the left and right view information, and display control means are arranged to extract the left and right video image information from the frame stores and input that information to a display monitor to construct a composite image that can be viewed as an apparently three-dimensional image.

2. A system according to Claim 1, wherein the inspection means comprises x-ray source means which directs two x-ray beams through the path of relative movement of the object to be inspected on to respective line-array detectors situated at the opposite side of said path, the two x-ray beams being set at an angle to one another in the plane containing said path to obtain said left and right perspective views.

3. A system according to Claim 2, wherein the inspection means comprises two differently directed x-ray sources to provide the two beams.

4. A system according to Claim 2, wherein the inspection means comprises a single x-ray source and means for deriving therefrom two collimated x-ray beams at an angle to one another.

5. A system according to Claim 1, wherein the inspection means comprises two line sensor cameras arranged with their line array imagers transverse to the path of relative movement of the object to be inspected and their viewing beams set at an angle to one another in the plane containing said path to obtain said left and right perspective views.

6. A system according to Claim 5, wherein said two line sensor cameras are mounted on a rotating head to view static objects around them.

7. A system according to any of Claims 2 to 6, wherein the angle between the beams is selected so that parallax in the composite displayed image will not exceed the normal tolerance of fusion limits for human observers.

8. A system according to any of the preceding Claims, comprising control means for bringing about relative lateral shift of the left and right images on the display monitor screen.

**0 261 984**

9. A system according to Claim 8, wherein the relative lateral shift of the images is produced by controlling the relative timing of the storage of the left and right view information in the respective frame stores.

10. A system according to Claim 8, wherein the relative lateral shift of the images is produced by shifting in its respective frame store the left or the right view information stored in one store.

0261984

121·10·87

# Fig.1.

Fig.2.

OBJECT DETECTION CIRCUIT — 35

TIME DELAY CCT — 36

FRAME STORE IMAGE SHIFT CIRCUIT — 37

FRAME STORE CONTROL CIRCUITRY — 38

FRAME STORE 1 (TM5 4116 -15) — 39

FRAME STORE 2 (TM5 4116 -15) — 40

VIDEO MULTIPLEXER (DG211) — 41

MONITOR — 42

SPEC. DRIVER — 46

OPERATOR CONSOLE

LEFT IMAGE / RIGHT IMAGE / 3-D IMAGE — 44

IMAGE IN OUT — 45

43

47

18
24
25
34
19
12
20
33
11
OPTICAL SENSE MODULES

0261984

## Fig.3a.

## Fig.3b.

0261984

Fig.4.